# EUROPEAN PATENT SPECIFICATION

(11) **EP 4 221 934 B1**
(45) Date of publication and mention of the grant of the patent: **04.11.2026**
(21) Application number: 21794633.4
(22) Date of filing: 29.09.2021
(51) Int. Cl.: B23Q 1/76, B23B 13/08, B23B 13/12

(54) **APPARATUS FOR CENTRING, GUIDING AND ADVANCING BARS TO BE FED TO MACHINE TOOLS**
VORRICHTUNG ZUM ZENTRIEREN, FÜHREN UND VORSCHIEBEN VON AN WERKZEUGMASCHINEN ZUZUFÜHRENDEN STANGEN
APPAREIL DE CENTRAGE, DE GUIDAGE ET D'AVANCE DE BARRES À ALIMENTER DANS DES MACHINES-OUTILS

(30) Priority: 02.10.2020 IT 202000023326
(43) Date of publication of application: 09.08.2023
(73) Proprietor: Cucchi Giovanni & C. S.r.l., 20041 Milan Bussero (IT)
(72) Inventor: CUCCHI, Cesare, 20060 Bussero (IT)
(74) Representative: Luppi Intellectual Property S.r.l.
(86) International application number: PCT/IB2021/058920
(87) International publication number: WO 2022/070080

(56) References cited:
- WO-A1-2017/149446
- DE-A1- 102014 100 788
- DE-U1- 29 500 846
- GB-A- 1 342 133

## Description

The present invention relates to an apparatus for advancing, centring and guiding a bar to be fed to a machine tool spindle, maintaining the aforesaid bar in an axially correct position.

### PRIOR ART

For machining a bar, tube, or in general an oblong metal piece, using a feeding and guiding apparatus is known the function of which is to advance the aforesaid bar to a machine tool, in particular a lathe of the single-spindle or multiple-spindle type.

The feeding apparatus comprises an advancement device for advancing the bar, generally a pusher or bar pusher, configured for exerting a pushing action on the rear end of the bar to be fed. A bar pusher of known type is described in ITMI20091964.

The feeding apparatus can further include a centring device the function of which is to attempt to reduce the oscillations to which the aforesaid bar is subjected and to maintain the bar in a correct axial position.

Some centring devices are known from EP0213659 and EP0485902 in the name of the present applicant, and yet others are known from DE102014100788, which forms the basis for the preamble of claim 1, GB1342133, DE29500846 and WO2017/149446.

Currently, machine tools such as lathes operate at very high rotation speeds, which can reach values of the order of ten thousand revolutions per minute or even more. Accordingly, in consideration of such high operating regimes, it is necessary to ensure precise axial positioning and precise advancement of the bar to be machined, reducing to a maximum the oscillations to which the bar is subjected to avoid damage to the apparatus and to avoid machining errors.

Current advancement devices and centring devices are not particularly effective in their advancement and guiding action and do not perform a satisfactory action of maintainte-nance of the bars in the perfectly aligned axial position.

The difficulty is accentuated by the fact that the bars, in addition to advancing axially, are also rotated around the longitudinal axis thereof.

When the bars to be processed are very slim, i.e. they have very reduced sections, they are very subject to shape instability phenomena, i.e. they have a great tendency to flex through small eccentricities and inertia during rotation, causing shocks and stress in this motion that are also harmful to the apparatus.

Current bar pusher devices are thus hardly effective in the advancement action as the pushing actions thereof exerted on the rear end of the bar do not at all facilitate containment of the phenomena of flexure or swinging of the bar, consequently making the action of guiding and positioning current centring devices more difficult so that they often turn out to be unsuitable.

An increase of the diameter of the bars is not matched by a reduction of the aforesaid instability and flexure phenomena because an equal increase of the rotation speeds of the bar again causes the aforementioned problems of oscillation or knocking or shocks.

Another limit of current devices is the great structural and functional complexity thereof, which is also reflected in a greater financial cost and unsatisfactory mechanical reliability.

Another embodiment of centring device is known from EP0689890, in the name of the same applicant. This device comprises an idling rotating annular guide element that is angularly orientable with respect to the bar.
The annular guide element is pushed to adhere to the bar at diametrically opposite points, orienting the bar by suitable actuators, and is rotated, exerting a dynamic centring action on the bar.

A similar centring device enables the problems of wear and noise caused by the knocking of the bars to be substantially reduced owing to the dynamic centring action on the bar; nevertheless, this centring device has rather a complex structure and requires a connection to a supply source that is suitable for allowing the operation of the actuators of the device.

It is clear that this solution, in addition to being rather complex structurally, it also operationally inconvenient because it requires an operator to intervene to adjust each time the angular orientation of the annular guide element according to the diameter of the bars to be centred.

Also centring devices are present that provide elastic blades fixed in a cantilevered manner to an annular support body; although such devices have quite a simple structural configuration, they are not able to satisfactorily remedy the problem of noise, surface damage to the bars, and in addition do not permit suitable adjustment of the pressure force with which the blades act on the bar being fed.

In the light of what has been described above, it is clear that there is ample room for improvement of current bar-centring systems.

### OBJECTS OF THE INVENTION

The main object of the present invention is to remedy the limits inherent in known centring systems.

Another object is to provide an apparatus that is at the same time structurally and functionally simple, effective and reliable, which is able to reduce significantly, owing the damping action, the noise and the risk of surface damage to the advancing bars.

In particular, the intention is to provide a self-centring device that is able to guide and to center bars of various diameter without the need to make adjustments to the device, also enabling bars having very reduced diameters to be centred.

A further object of the present invention is to provide a self-centring device that is easy to fit to any already existing bar-feeding apparatus, with clear advantages in terms of cost and assembly times.

A still further object is to provide an apparatus that is constructionally cheap but highly performing that is able to advance the bars with more facility in an optimum manner, ensuring the correct positioning thereof and reducing significantly the oscillation and swinging phenomena to which the bars are subjected during advancement.

### SHORT DESCRIPTION OF THE INVENTION

The above can be achieved by the solution as defined in the enclosed claims.

Owing to the solution according to the invention, all the above objects are achieved.

### SHORT DESCRIPTION OF THE DRAWINGS

These and further features according to the present invention will be clearer from the following description with reference to the attached drawings, in which:

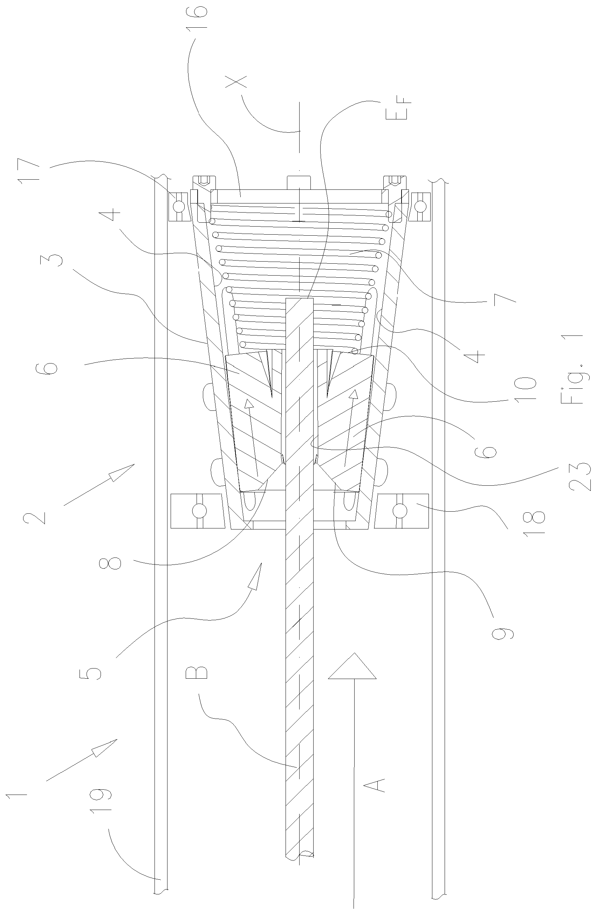

Figure 1 is a longitudinal section view of part of an apparatus that includes a self-centring device for bars according to the present invention;
Figures 2 and 3 are two different perspective views of the self-centring device according to the present invention;

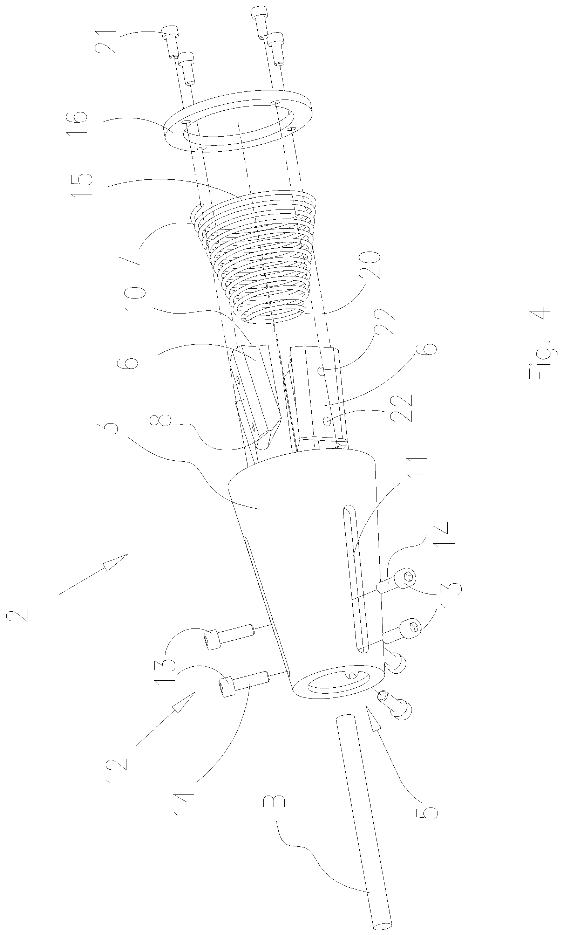

Figure 4 is an exploded view of the self-centring device according to the present invention;
Figure 5 is a frontal view of the self-centring device according to the present invention;
Figure 6 is a longitudinal section taken along the plane VI-VI in Figure 5;
Figure 7 is a longitudinal section of the self-centring device in operation, in which a bar of reduced section is shown;
Figure 8 shows the self-centring device in an operating condition before receiving a bar having a greater section than the case shown in Figure 7;
Figure 9 shows the self-centring device coupled with the bar to be fed shown in Figure 8;
Figures 10 and 11 show an advancement device included in the apparatus according to the invention respectively in two different operating positions.

### DETAILED DESCRIPTION OF THE INVENTION

With reference to the attached Figures, an apparatus 1 is shown for centring, guiding and advancing bars B (or tubes or other oblong metal elements) intended to be supplied to a machine tool, in particular to a lathe that can be of the single-spindle or multi-spindle type.

The apparatus 1 comprises a self-centring device 2 for centring and guiding a bar B to be advanced to a spindle of a lathe.

The self-centring device 2 according to the invention is configured for guiding and maintaining the bars or tubes aligned on the work axis of the machine tool, adapting to bars or tubes of different diameter.

For the purposes of the present description, the term "bar" means any elongated linear element, of circular or polygonal, full or tubular section.

The self-centring device 2 comprises a hollow containing body 3 that extends along a longitudinal axis X. In the containing body 3 a through opening 5 is defined - extending along the aforesaid longitudinal axis X - suitable for being traversed by the bar B to be fed along an advancement direction A to a spindle of the lathe, or anyway to the machine tool.

The containing body 3, in particular, has a frustoconical shape and is couplable with a tubular element 19 of the feeding apparatus.

The self-centring device 2, if desired, can also be fitted to a part of the lathe. In this case, the containing body 3 will be suitably connected to a tubular portion of the aforesaid lathe.

In the hollow containing body 3, an inner sliding surface 4 is defined that is tilted with respect to the aforesaid longitudinal axis X; precisely, the inner sliding surface 4 is divergent in the advancement direction of the bar B, i.e. according to the advancement direction A.

Inside the hollow containing body 3, a plurality of centring and guiding elements 6 is housed, shaped for interacting, i.e. coming into contact, with the bar B and for exerting a distributed centring and guiding action around the bar B.

The centring and guiding elements 6 can be any desired number, for example, three or more, according to specific needs and in function of the sizing of the self-centring device 2. The centring and guiding elements 6 are circularly and evenly distributed around the longitudinal axis X.

The centring and guiding elements 6 are movable slidably along the inner sliding surface 4 so as to vary the distance thereof from the longitudinal axis X to adapt to various possible bar diameters B.

The centring and guiding elements 6 are movable from a position of minimal reciprocal distance to a position of maximum reciprocal distance, to adapt to different possible diameters of the bar.

The self-centring device 2 further comprise retaining and guiding means (11,12,13,14) for the centring and guiding elements 6.

The retaining and guiding means comprises, for each centring and guiding element 6, a sliding slot 11 obtained along the wall of the containing body 3 and screw elements 12 engaging in holes 22 obtained on a respective centring and guiding element 6 and slidable along the respective sliding slot 11.

Each screw element 12 is shaped with a stem 14, that is slidable along the respective sliding slot 11, and with a head 13 shaped for maintaining the centring and guiding element 6 coupled with the containing body 3 to prevent reciprocal separation thereof.

The self-centring device 2 comprises elastic means 7 configured for urging the centring and guiding elements 6 to the position of minimal reciprocal distance so as to induce and maintain, during operation, the aforesaid centring and guiding elements 6 in contact with the surface of said bar B. In other words, the elastic means 7 ensures that the centring and guiding elements 6 are always clamped around the bar, so as to keep the bar in the correct position.

The elastic means, more precisely, comprises a helical spring 7 having a base end 15 in a position that is stationary with respect to the containing body 3, and a movable pushing end 20 in contact with the centring and guiding elements 6.

The helical spring 7 extends around the longitudinal axis X and has coils of progressively decreasing diameter in the direction that goes from the base end 15 to the movable pushing end 16.

Each centring and guiding element 6 has a front end portion 8 that is suitable for intercepting a front end E_{F} of the bar B.

On the front end portion 8 a tilted promoting surface 9 is defined that eases the penetration of the bar B into the containing body 3.

The tilted promoting surface 9 is shaped for receiving a push from the front end E_{F} of the bar B intended to move the respective centring and guiding element 6 along the inner sliding surface 4.

The centring and guiding elements 6 have respective rear end portions 10 on which the aforesaid elastic means 7 act to push the centring and guiding elements 6 against the bar B.

An annular flange 16 is further provided to retain the helical spring 7 inside the containing body 3.

The annular flange 16 has a surface configured for being fixed to a wider end of the containing body 3 and for restingly receiving the base end 15 of the helical spring 7.

Bearing means 17, 18 is further provided that is fitted around the containing body 3 and suitable for enabling the containing body 3 to be rotatably coupled and housed inside a portion of a tubular element 19 of a feeding apparatus or machine tool, inside which the bars to be machined can advance.

The operation of the self-centring device 2 is now disclosed briefly.

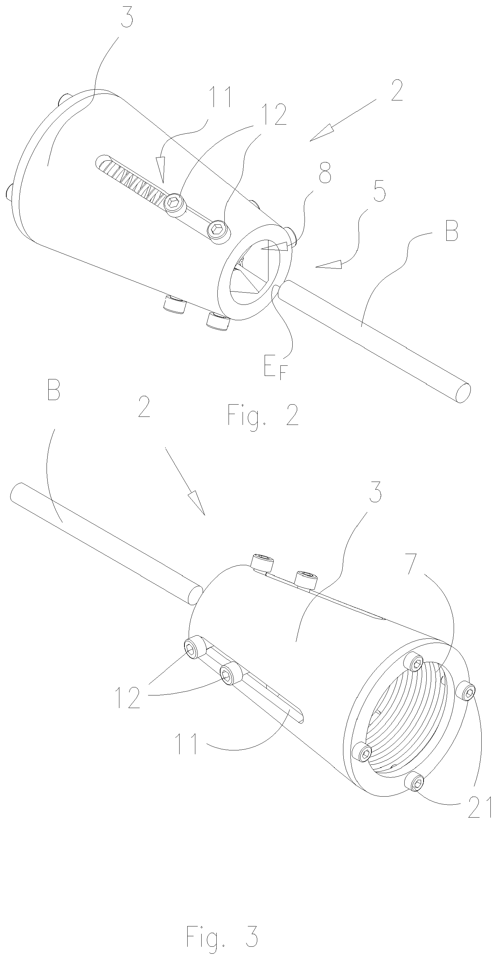

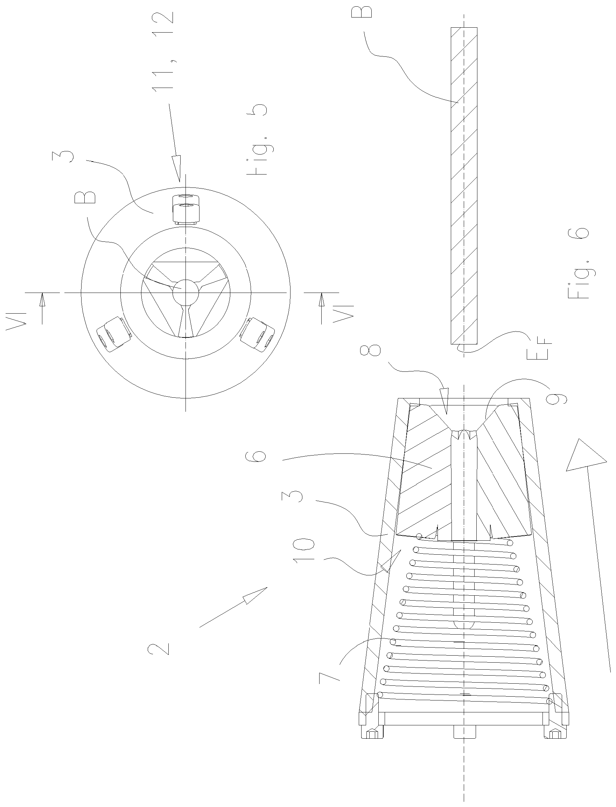

In a rest condition, shown for example in Figures 2, 3, 6, the device 2 is ready for receiving a bar. The centring and guiding elements 6, through the effect of the push of the spring 7, are placed in a mutually nearer position.

The tilted surfaces 9 are ready to receive and come into contact with the front end E_{F} of a bar B.

When the bar B comes into contact with the end portions 8 of the centring and guiding elements 6, the bar B exerts on the latter a push that causes movement thereof and reciprocal spacing apart in a radial direction; in other words, the centring and guiding elements 6 comprise the helical spring 7 and diverge from one another by sliding along the inner surface 4 of the containing body 3 until the position is reached corresponding to the diameter of the bar B penetrating the containing body 3.

The correct and precise movement of the centring and guiding elements 6 is assured by the screw elements 12 cooperating with, and sliding along, the sliding slots 11.

The tilted surfaces 9 ease the coupling between the bar B and the centring and guiding elements 6. Once the bar B has penetrated between the centring and guiding elements 6, the spring 7 works by maintaining the abutting surfaces 23 of the centring and guiding elements 6 resting on the cylindrical side surface of the bar B.

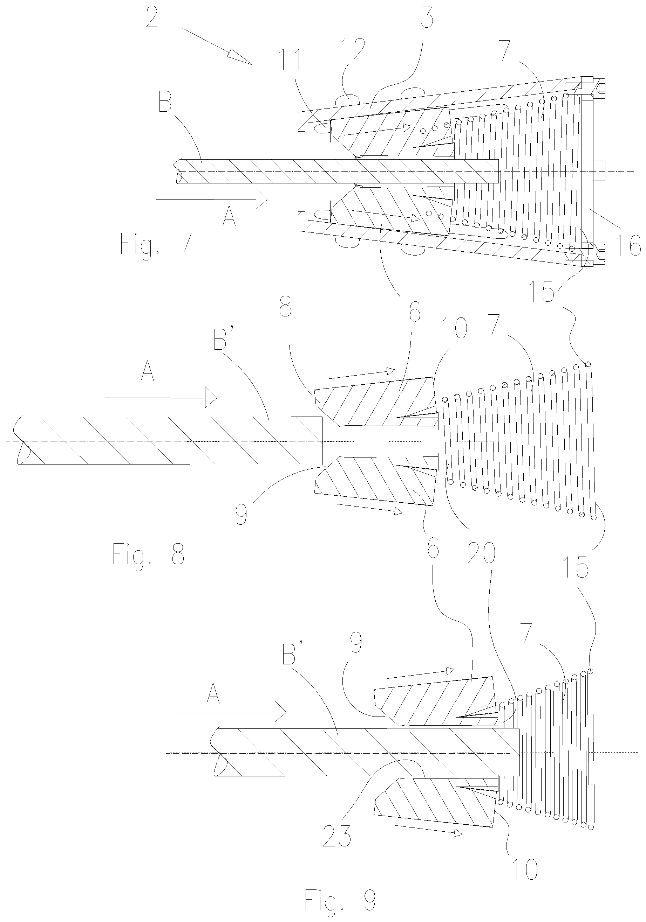

Figures 8 and 9 show the operation of the self-centring device 2 in the case of a bar B' of greater diameter.

Owing to the particular structural configuration, the centring and guiding elements 6 adapt independently to any diameter of the bar B, without the need for any outside intervention.

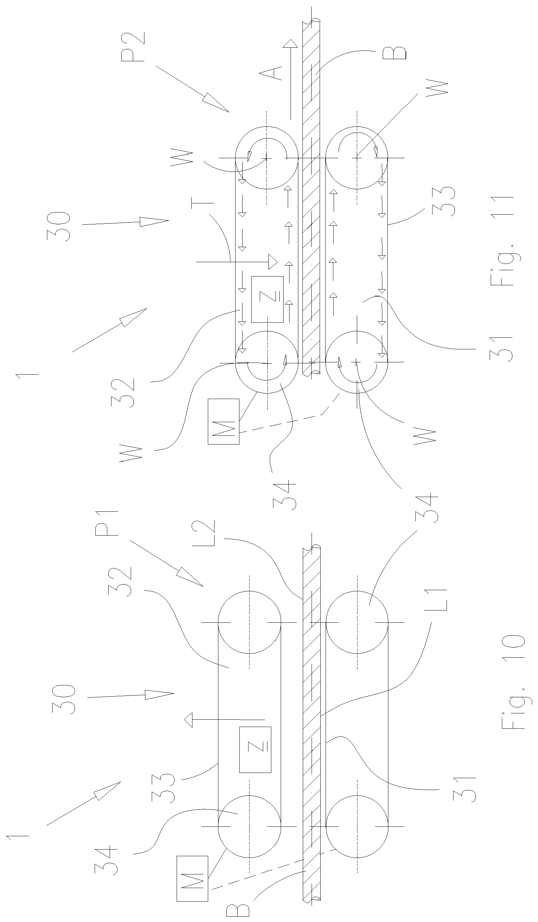

With particular reference to Figures 10 and 11, the apparatus 1 comprises an advancement device 30 for the bars B, tubes or the like.

The advancement device 30 comprises a supporting and guiding member 31 configured for restingly receiving, on a first side L1, a bar B and configured for guiding the bar B along the advancement direction A.

The advancement device 30 comprises a movable grasping member 32 that is movable by a movement member Z, along an advancement direction T transversely to the advancement direction A.

The grasping member 32 is movable from a disengaged position P1, in which it is further from the supporting and guiding member 31 so as to be separated the bar B, to a locking position P2, in which the grasping member 32 is nearer the supporting member 31 to press longitudinally the bar B from a second side L2 opposite the first side L1 and against the supporting member 31.

The advancement device 30 comprises advancement motor means M configured for rotating the supporting and guiding member 31 and/or the movable grasping member 32 in the locking position P2 to drag and advance the bar B along the advancement direction A.

The motor means in particular comprises an electric motor of *brushless* type.

The supporting and guiding member 31 and/or the grasping member 32 comprises a belt or tape element 33 that is wound around a pair of wheel elements 34 included in the advancement device 30.

The wheel elements 34 are spaced and rotatable around respective axes W arranged transversely to the advancement direction A.

The belt or tape element 33 is shaped for coming into contact with the side surface of the bar B to exert thereupon the action of dragging along the advancement direction A.

During operation, when the grasping member 32 is in the disengaged position P1, a bar B having any diameter can come to rest on the supporting and guiding member 31.

The movement member Z can bring the grasping member 32 up to the supporting and guiding member 31 until the locking position P2 is reached in which the bar B is grasped and clamped between the two members 31 and 32.

The motor M can then be driven to rotate the movable grasping member 32 and/or the support member 31, to advance the bar B as the arrows indicated in Figure 11 show.

From what has been said and shown in the attached drawings, it is clear that the solution according to the invention achieves all the set objects.

In particular, the self-centring device 2 according to the invention is at the same time structurally simple and functionally effective and reliable, able to noticeably reduce, owing to the damping action performed by the oblong centring elements, the noise and the risk of surface damage to the advancing bars B.

The centring device according to the invention, of the passive type, is operationally and constructionally economical, being also very versatile; the centring device adapts automatically with efficacy to bars of various diameter, also very reduced, without the need to make adjustments on the device itself.

In particular, the static centring action supplied by the self-centring device 2 according to the invention is more effective in contrasting the great stress to which the bar B being supplied to the machine tool is subjected.

The effective guiding and centring action avoids knocking of the bar B, prevents any risk of surface damage to the latter and reduces wear and noise during feeding of the bar B.

The self-centring device 2 according to the invention is easy to fit to any already existing bar-feeding apparatus, with clear advantages in terms of assembly cost and time.

The advancement device 30 included in the apparatus 1 according to the invention is further highly performing despite being constructionally economical; it is able to advance with great facility and in an optimized manner the bars B, ensuring the correct positioning thereof effectively and significantly reducing oscillation and swinging phenomena to which the bars are subjected during advancement: this is possible owing to the bilateral grasping action and distributed longitudinally along the cylindrical surface of the bar B, differently from the usual bar pushers that on the other hand, by acting on only the rear end of the bar, are not able to contain swinging phenomena.

Accordingly, the advancement device 30 included in the apparatus 1 according to the invention is significantly more effective in advancing, guiding and maintaining the bars B in the perfectly aligned axial position.

It is understood that what has been said and shown with reference to the attached drawings has been provided merely by way of illustration of the general features of the apparatus 1; so other modifications or variants can be made to the device or to parts thereof without thereby falling outside the scope of the claims.

In particular, the geometric conformation, dimensions and materials that make up one or more parts of the apparatus 1, in particular the self-centring device 2 and the advancement device 30, can be chosen and/or optimized appropriately on the basis of specific use requirements.

## Claims

1. Self-centring device (2) for centring and guiding a bar (B), tube or the like to be advanced to a spindle of a machine tool, comprising:
- a hollow containing body (3) with a through opening (5) extending along a longitudinal axis (X) and suitable for receiving and being traversed by a bar (B) to be fed along an advancement direction (A) to said spindle,
- in said hollow containing body (3) an inner sliding surface (4) being defined that is tilted with respect to a said longitudinal axis (X),
- a plurality of centring and guiding elements (6) housed in said hollow containing body (3) and shaped for coming into contact with said bar (B) and exerting a centring and guiding action distributed around said bar (B),
- said centring and guiding elements (6) being slidably movable along said inner sliding surface (4) so as to vary the distance thereof from said longitudinal axis (X) to adapt to various possible bar diameters (B),
- said centring and guiding elements (6) being movable from a position of minimal reciprocal distance to a position of maximum reciprocal distance, to adapt to various possible bar diameters (B),
- elastic means (7) configured for urging said centring and guiding elements (6) to said position of minimal reciprocal distance so as to induce and maintain, during operation, said centring and guiding elements (6) in contact with the surface of said bar (B), and **characterized by**
- said centring and guiding elements (6) being provided with respective rear end portions (10) on which said elastic means (7) acts to push said centring and guiding elements (6) against said bar (B).

2. Self-centring device according to claim 1, wherein each of said centring and guiding elements (6) has a front end portion (8) that is suitable for intercepting a front end (E_{F}) of the bar (B), on said front end portion (8) a tilted promoting surface being defined (9) to promote penetration of the bar (B) in said containing body (3), said tilted promoting body (9) being shaped for receiving a push from said front end (E_{F}) of the bar (B) intended to move the respective centring and guiding element (6) along said inner sliding surface (4).

3. Self-centring device according to claim 1 or 2, wherein said containing body (3) has a frustoconical shape, and in which said inner surface (4) is divergent according to said advancement direction (A).

4. Self-centring device according to any one of the preceding claims, further comprising retaining and guiding means (11, 12, 13, 14) for said centring and guiding elements (6).

5. Self-centring device according to claim 4, wherein said retaining and guiding means comprises, for each centring and guiding element (6), a sliding slot (11) obtained along a wall of said containing body (3) and screw elements (12) engaging a respective centring and guiding element (6) and slidable along a sliding slot (11), each screw element (12) being shaped with a stem (14), that is slidable along the respective sliding slot (11), and with a head (13) shaped for maintaining the element (6) centring and guiding element coupled with said containing body (3) preventing reciprocal separation thereof.

6. Self-centring device according to any one of the preceding claims, wherein said elastic means comprises a helical spring (7) with a base end (15) in a position that is stationary with respect to said containing body (3), and a movable pushing end (20) in contact with said centring and guiding elements (6), said helical spring (7) extending around said longitudinal axis (X) with coils of progressively decreasing diameter from said base end (15) to said movable pushing end (16).

7. Self-centring device according to claim 6, further comprising an annular flange (16) for retaining said helical spring (7) inside said containing body (3), said annular flange (16) having a surface configured for being fixed to an end of said containing body (3) and for restingly receiving said base end (15) of said helical spring (7).

8. Self-centring device according to any one of the preceding claims, further comprising bearing means (17, 18) fitted around said containing body (3) and suitable for enabling said containing body (3) to be housed rotatably inside a tubular element (19), of a feeding apparatus or machine tool, for advancing the bars.

9. Apparatus for feeding a bar (B) to a machine tool spindle, comprising a self-centring device (2) according to any one of claims 1 to 8.

## Patentansprüche

1. Selbstzentrierende Vorrichtung (2) zum Zentrieren und Führen einer Stange (B), eines Rohrs oder dergleichen, die einer Spindel einer Werkzeugmaschine zuzuführen ist, umfassend:
- einen hohlen Aufnahmekörper (3) mit einer Durchgangsöffnung (5), die sich entlang einer Längsachse (X) erstreckt und dafür geeignet ist, eine entlang einer Vorschubrichtung (A) der Spindel zuzuführende Stange (B) aufzunehmen und von dieser durchquert zu werden,
- wobei in dem hohlen Aufnahmekörper (3) eine innere Gleitoberfläche (4) definiert ist, die in Bezug auf die Längsachse (X) geneigt ist,
- eine Vielzahl von Zentrier- und Führungselementen (6), die in dem hohlen Aufnahmekörper (3) untergebracht und dafür geformt sind, mit der Stange (B) in Kontakt zu kommen und eine um die Stange (B) verteilte Zentrier- und Führungswirkung auszuüben,
- die Zentrier- und Führungselemente (6) entlang der inneren Gleitoberfläche (4) verschiebbar bewegbar sind, um ihren Abstand von der Längsachse (X) zu verändern, um sich an verschiedene mögliche Stangendurchmesser (B) anzupassen,
- die Zentrier- und Führungselemente (6) von einer Position minimalen gegenseitigen Abstandes in eine Position maximalen gegenseitigen Abstandes bewegbar sind, um sich an verschiedene mögliche Stangendurchmesser (B) anzupassen,
- elastische Mittel (7), die konfiguriert sind, um die Zentrier- und Führungselemente (6) in die Position minimalen gegenseitigen Abstandes zu drängen, um während des Betriebs die Zentrier- und Führungselemente (6) mit der Oberfläche der Stange (B) in Kontakt zu bringen und darin zu halten, und **dadurch gekennzeichnet, dass**
- die Zentrier- und Führungselemente (6) mit jeweiligen hinteren Endabschnitten (10) bereitgestellt sind, auf welche die elastischen Mittel (7) einwirken, um die Zentrier- und Führungselemente (6) gegen die Stange (B) zu drücken.

2. Selbstzentrierende Vorrichtung nach Anspruch 1, wobei jedes der Zentrier- und Führungselemente (6) einen vorderen Endabschnitt (8) aufweist, der zum Erfassen eines vorderen Endes (E_{F}) der Stange (B) geeignet ist, wobei an dem vorderen Endabschnitt (8) eine geneigte Förderoberfläche (9) definiert ist, um das Eindringen der Stange (B) in den Aufnahmekörper (3) zu fördern, wobei die geneigte Förderoberfläche (9) dafür geformt ist, einen Schub von dem vorderen Ende (E_{F}) der Stange (B) aufzunehmen, der dazu bestimmt ist, das jeweilige Zentrier- und Führungselement (6) entlang der inneren Gleitfläche (4) zu bewegen.

3. Selbstzentrierende Vorrichtung nach Anspruch 1 oder 2, wobei der Aufnahmekörper (3) eine kegelstumpfförmige Form aufweist und wobei die innere Oberfläche (4) gemäß der Vorschubrichtung (A) divergent ist.

4. Selbstzentrierende Vorrichtung nach einem der vorstehenden Ansprüche, ferner umfassend Rückhalte- und Führungsmittel (11, 12, 13, 14) für die Zentrier- und Führungselemente (6).

5. Selbstzentrierende Vorrichtung nach Anspruch 4, wobei die Rückhalte- und Führungsmittel für jedes Zentrier- und Führungselement (6) ein Gleitlangloch (11), das entlang einer Wand des Aufnahmekörpers (3) ausgebildet ist, und Schraubenelemente (12) umfassen, die mit einem jeweiligen Zentrier- und Führungselement (6) in Eingriff stehen und entlang eines Gleitlanglochs (11) verschiebbar sind, wobei jedes Schraubenelement (12) mit einem Schaft (14), der entlang des jeweiligen Gleitlanglochs (11) verschiebbar ist, und mit einem Kopf (13) geformt ist, der dafür geformt ist, das Zentrier- und Führungselement (6) mit dem Aufnahmekörper (3) gekoppelt zu halten und dessen gegenseitiges Trennen zu verhindern.

6. Selbstzentrierende Vorrichtung nach einem der vorstehenden Ansprüche, wobei die elastischen Mittel eine Schraubenfeder (7) mit einem Basisende (15) in einer bezüglich des Aufnahmekörpers (3) ortsfesten Position und einem beweglichen Drückende (20) in Kontakt mit den Zentrier- und Führungselementen (6) umfassen, wobei sich die Schraubenfeder (7) um die Längsachse (X) mit Windungen von dem Basisende (15) zu dem beweglichen Drückende (16) hin progressiv abnehmenden Durchmessers erstreckt.

7. Selbstzentrierende Vorrichtung nach Anspruch 6, ferner umfassend einen Ringflansch (16) zum Rückhalten der Schraubenfeder (7) im Inneren des Aufnahmekörpers (3), wobei der Ringflansch (16) eine Oberfläche aufweist, die konfiguriert ist, um an einem Ende des Aufnahmekörpers (3) befestigt zu werden und das Basisende (15) der Schraubenfeder (7) aufliegend aufzunehmen.

8. Selbstzentrierende Vorrichtung nach einem der vorstehenden Ansprüche, ferner umfassend Lagermittel (17, 18), die um den Aufnahmekörper (3) herum angebracht sind und dazu geeignet sind, ein drehbares Unterbringen des Aufnahmekörpers (3) in einem Rohrelement (19) eines Zuführgeräts oder einer Werkzeugmaschine zum Vorschieben der Stangen zu ermöglichen.

9. Gerät zum Zuführen einer Stange (B) zu einer Werkzeugmaschinenspindel, umfassend eine selbstzentrierende Vorrichtung (2) nach einem der Ansprüche 1 bis 8.

## Revendications

1. Dispositif d'autocentrage (2) destiné à centrer et guider une barre (B), un tube ou analogue devant être avancé vers une broche d'une machine-outil, comprenant :
- un corps de réception creux (3) doté d'une ouverture traversante (5) s'étendant le long d'un axe longitudinal (X) et apte à recevoir et à être traversé par une barre (B) à acheminer le long d'une direction d'avancement (A) vers ladite broche,
- dans ledit corps creux de logement (3) une surface de glissement interne (4) étant définie qui est inclinée par rapport à un dit axe longitudinal (X),
- une pluralité d'éléments de centrage et de guidage (6) logés dans ledit corps creux de logement (3) et conformés pour venir en contact avec ladite barre (B) et exercer une action de centrage et de guidage répartie autour de ladite barre (B),
- lesdits éléments de centrage et de guidage (6) étant mobiles à coulissement le long de ladite surface de coulissement intérieure (4) de manière à faire varier leur distance par rapport audit axe longitudinal (X) pour s'adapter à divers diamètres de barre possibles (B),
- lesdits éléments de centrage et de guidage (6) étant mobiles d'une position de distance réciproque minimale à une position de distance réciproque maximale, pour s'adapter à divers diamètres de barre possibles (B),
- des moyens élastiques (7) configurés pour solliciter lesdits éléments de centrage et de guidage (6) vers ladite position de distance réciproque minimale de manière à induire et maintenir, pendant le fonctionnement, lesdits éléments de centrage et de guidage (6) en contact avec la surface de ladite barre (B), et **caractérisé par**
- lesdits éléments de centrage et de guidage (6) étant pourvus de parties d'extrémité arrière respectives (10) sur lesquelles ledit moyen élastique (7) agit pour pousser lesdits éléments de centrage et de guidage (6) contre ladite barre (B).

2. Dispositif d'autocentrage selon la revendication 1, dans lequel chacun desdits éléments de centrage et de guidage (6) présente une partie d'extrémité avant (8) qui est appropriée pour intercepter une extrémité avant (E_{F}) de la barre (B), une surface de facilitation inclinée (9) étant définie sur ladite partie d'extrémité avant (8) pour faciliter la pénétration de la barre (B) dans ledit corps de réception (3), ledit surface de facilitation incliné (9) étant profilé pour recevoir une poussée de ladite extrémité avant (E_{F}) de la barre (B) destinée à déplacer l'élément de centrage et de guidage (6) respectif le long de ladite surface de coulissement interne (4).

3. Dispositif d'autocentrage selon la revendication 1 ou 2, dans lequel ledit corps contenant (3) présente une forme tronconique, et dans lequel ladite surface interne (4) est divergente selon ladite direction d'avancement (A).

4. Dispositif d'autocentrage selon l'une quelconque des revendications précédentes, comprenant en outre des moyens de retenue et de guidage (11, 12, 13, 14) pour lesdits éléments de centrage et de guidage (6).

5. Dispositif d'autocentrage selon la revendication 4, dans lequel lesdits moyens de retenue et de guidage comprennent, pour chaque élément de centrage et de guidage (6), une fente de coulissement (11) obtenue le long d'une paroi dudit corps de logement (3) et des éléments de vis (12) venant en prise avec un élément de centrage et de guidage (6) respectif et pouvant coulisser le long d'une fente de coulissement (11), chaque élément de vis (12) étant profilé avec une tige (14), qui peut coulisser le long de la fente de coulissement (11) respective, et avec une tête (13) profilée pour maintenir l'élément de centrage et de guidage (6) accouplé avec ledit corps de logement (3) empêchant leur séparation réciproque.

6. Dispositif d'autocentrage selon l'une quelconque des revendications précédentes, dans lequel ledit moyen élastique comprend un ressort hélicoïdal (7) avec une extrémité de base (15) dans une position qui est fixe par rapport audit corps contenant (3), et une extrémité de poussée mobile (20) en contact avec lesdits éléments de centrage et de guidage (6), ledit ressort hélicoïdal (7) s'étendant autour dudit axe longitudinal (X) avec des spires de diamètre progressivement décroissant de ladite extrémité de base (15) à ladite extrémité de poussée mobile (16).

7. Dispositif d'autocentrage selon la revendication 6, comprenant en outre une bride annulaire (16) pour retenir ledit ressort hélicoïdal (7) à l'intérieur dudit corps de réception (3), ladite bride annulaire (16) ayant une surface configurée pour être fixée à une extrémité dudit corps de réception (3) et pour recevoir en appui ladite extrémité de base (15) dudit ressort hélicoïdal (7).

8. Dispositif d'autocentrage selon l'une quelconque des revendications précédentes, comprenant en outre des moyens de palier (17, 18) montés autour dudit corps de logement (3) et aptes à permettre audit corps de logement (3) d'être logé à rotation à l'intérieur d'un élément tubulaire (19), d'un appareil d'alimentation ou d'une machine-outil, pour l'avance des barres.

9. Appareil destiné à amener une barre (B) à une broche de machine-outil, comprenant un dispositif d'autocentrage (2) selon l'une quelconque des revendications 1 à 8.
